# EUROPÄISCHE PATENTSCHRIFT

(11) **EP 2 227 369 B1**
(45) Veröffentlichungstag und Bekanntmachung des Hinweises auf die Patenterteilung: **18.12.2013**
(21) Anmeldenummer: 09700689.4
(22) Anmeldetag: 08.01.2009
(51) Int. Cl.: B29C 47/00, B29C 47/08, B29C 49/04, B29C 49/22, B29C 49/58, B29C 49/60, B29C 49/28

(54) **EXTRUSIONSBLASVORRICHTUNG UND VERFAHREN ZUR HERSTELLUNG VON KUNSTSTOFFBEHÄLTERN**
EXTRUSION BLOW-MOLDING DEVICE AND METHOD FOR PRODUCING PLASTIC CONTAINERS
DISPOSITIF D'EXTRUSION-SOUFFLAGE ET PROCÉDÉ DE FABRICATION DE RÉCIPIENTS EN MATIÈRE PLASTIQUE

(30) Priorität: 11.01.2008 CH 41082008
(43) Veröffentlichungstag der Anmeldung: 15.09.2010
(73) Patentinhaber: Soplar S.A., 9450 Altstätten (CH)
(72) Erfinder: MÜLLER, Alexander, CH-9450 Altstätten (CH)
(74) Vertreter: EGLI-EUROPEAN PATENT ATTORNEYS
(86) Internationale Anmeldenummer: PCT/CH2009/000008
(87) Internationale Veröffentlichungsnummer: WO 2009/086651

(56) Entgegenhaltungen:
- EP-A- 0 858 878
- WO-A-02/081180
- WO-A-2004/078457
- DE-U1- 29 807 426
- US-A- 3 943 214

## Beschreibung

Die Erfindung betrifft eine Extrusionsblasvorrichtung zur Herstellung von Hohlkörpern gemäss dem Oberbegriff des Patentanspruchs 1. Die Erfindung betrifft auch ein Verfahren zu Herstellung von Kunststoffbehältern in einem Extrusionsblasprozess.

Die in der Vergangenheit üblichen Behältnisse aus Weiss- oder Buntblech, aus Glas oder auch aus Keramik werden in zunehmendem Masse von Behältnissen aus Kunststoff abgelöst. Insbesondere für die Verpackung fluider Substanzen, beispielsweise von Getränken, Öl, Reinigungsutensilien, Kosmetika usw., kommen hauptsächlich Kunststoffbehältnisse zum Einsatz. Das geringe Gewicht und die geringeren Kosten spielen sicher eine nicht unerhebliche Rolle bei dieser Substitution. Die Verwendung rezyklierbarer Kunststoffmaterialien und die insgesamt günstigere Gesamtenergiebilanz bei ihrer Herstellung tragen auch dazu bei, die Akzeptanz von Kunststoffbehältnissen, insbesondere von Kunststoffflaschen, beim Konsumenten zu fördern.

Die Herstellung von Kunststoffbehältnissen, insbesondere Kunststoffflaschen, beispielsweise aus Polyethylen oder Polypropylen, erfolgt im Extrusionsblasverfahren, insbesondere in einem Schlauchblasverfahren. Dabei wird von einem Extruderkopf ein Kunststoffschlauch extrudiert, in Blasformwerkzeuge eingebracht, über eine Einblasvorrichtung, beispielsweise einen Blasdorn oder eine Blasnadel, durch Überdruck aufgeblasen und durch Kühlung ausgehärtet. Die dafür eingesetzten Extrusionsblasmaschinen besitzen in der Regel wenigstens einen Extruder zur Zuführung des Kunststoffmaterials. Der Ausgang des Extruders ist mit dem Extruderkopf verbunden, an dessen vorzugsweise in der Öffnungsweite regulierbarer Austrittsdüse der ein oder mehrschichtig extrudierte Schlauch austritt. Der extrudierte Schlauch wird an ein Blasformwerkzeug übergeben und innerhalb dessen Kavität mit der Einblasvorrichtung, beispielsweise einem Blasdorn oder einer Blasnadel, aufgeblasen. Beim Aufblasen mit einem Blasdorn wird gleichzeitig der Halsabschnitt der Kunststoffflasche ausgeformt. Mit einer Blasnadel erfolgt nur ein Aufblasen des in die Formkavität eingelegten Kunststoffschlauchs. Der Kunststoffschlauch kann ein- oder mehrschichtig sein, er kann als Schlauch mit Sichtstreifen, Dekorstreifen oder bezogen auf den Umfang mit mehreren, beispielsweise verschiedenfarbigen, Segmenten extrudiert sein.

Die Blasstation mit der Einblasvorrichtung ist üblicherweise seitlich des Extruderkopfes angeordnet, und das mit dem extrudierten Schlauch beschickte Blasformwerkzeug muss in die Blasstation bewegt werden, wo dann die Einblasvorrichtung, beispielsweise ein Blasdorn, meist von oben in die Blasformkavität eingefahren wird. Für den kontinuierlichen Betrieb sind bei einer Art der bekannten Extrusionsblasmaschinen üblicherweise zwei Blasstationen vorgesehen. Jede Blasstation ist mit einem Blasformwerkzeug ausgestattet. Die Blasstationen sind dabei zu beiden Seiten des Extruders, einander gegenüberliegend angeordnet und weisen Blasformtische mit den Blasformwerkzeugen auf, die abwechselnd unter den Extruderkopf bewegt werden, um den extrudierten Schlauch zu empfangen. Dabei wird das Blasformwerkzeug zum Abholen des Schlauches geöffnet. Nach dem Schliessen des Blasformwerkzeugs wird der Schlauch zwischen dem Extrusionskopf und dem Blasformwerkzeug abgetrennt. Danach wird der Blasformtisch wieder in die Blasstation bewegt, wo die Einblasvorrichtung in die Kavität des Blasformwerkzeugs eingefahren und der Schlauch gemäss der Blasformkavität aufgeblasen und danach entnommen wird. Bei Mehrfachextrusionsköpfen und Mehrfachblasformwerkzeugen ist jede Blasstation mit einer korrespondierenden Anzahl von Einblasvorrichtungen ausgestattet, die gemeinsam in die Blasformkavitäten eingefahren werden. Gesamthaft bilden der Extruder mit dem Extruderkopf und die beiden Blasstationen etwa die Form eines T. Dabei stellt der Extruder mit dem Extruderkopf den langen T-Strich dar, während die beiden Blasformtische abwechselnd entlang der kurzen Querstrichhälften unter den Extruderkopf bewegbar sind.

Es sind auch Extrusionsblasmaschinen bekannt, bei denen eine Anzahl von Blasformwerkzeugen auf einem rotierenden Rad angeordnet ist. Das Rad steht etwa vertikal und führt die Blasformwerkzeuge etwa tangential an den vom Extruderkopf kontinuierlich extrudierten Kunststoffschlauch heran. Kurz vor Erreichen des extrudierten Kunststoffschlauchs wird das herangeführte Blasformwerkzeug geöffnet, um den Schlauch abzuholen. Beim Weiterdrehen des Rads wird das Blasformwerkzeug um den eingelegten Schlauch geschlossen und dieser beim Weiterdrehen schliesslich abgeschert. Die Anordnung der Blasformwerkzeuge und die Drehgeschwindigkeit des Rads sind derart gewählt, dass der Schlauch erst abgeschert wird, wenn sich das nachfolgende Blasformwerkzeug um das nächst Schlauchstück geschlossen hat. Der in der Kavität des Blasformwerkzeuges befindliche Schlauch gelangt beim Weiterdrehen des Rades schliesslich in die Blasstation, wo er über eine seitlich in das Formwerkzeug eingeführte Einblasvorrichtung gemäss der Blasformkavität aufgeblasen wird. Schliesslich wird der aufgeblasene Hohlkörper durch Öffnen aus dem Blasformwerkzeug ausgegeben. Das am rotierenden Rad angeordnete Blasformwerkzeug wird bei der Weiterbewegung wieder geschlossen und wieder an den Extruderkopf herangeführt, um einen weiteren extrudierten Schlauch aufzunehmen.

Gemäß den Oberbegriffen der Ansprüche 1 und 10 ist aus der WO 2004/078457 A1 eine Extrusionsblasvorrichtung zur Herstellung von Hohlkörpern, insbesondere von Kunststoffflaschen, bekannt, die einen in einem Geräterahmen angeordneten Extruderkopf mit wenigstens einer Extrusionsdüse, eine Blasformwerkzeuganordnung mit wenigstens einer Blasformkavität, wenigstens eine Einblasvorrichtung und wenigstens eine Trenneinrichtung aufweist. Die Blasformwerkzeuganordnung weist an ihrer der Extrusionsdüse abgewandten Seite eine Mündung auf, durch welche die ebenfalls an der dem Extruderkopf abgewandten Seite der Blasformwerkzeuganordnung angeordnete Einblasvorrichtung in die Formkavität einfahrbar ist. Durch die gewählte Anordnung wird der extrudierte Kunststoffschlauch während des gesamten Herstellungszyklusses eines Behälters gehalten und permanent geführt. Dabei wird der relative axiale Abstand zwischen der Blasformwerkzeuganordnung und dem Extruderkopf verändert. Üblicherweise erfolgt dies durch eine zwangsgeführte axiale Höhenverstellung des Extruderkopfes gegenüber der Blasformwerkzeuganordnung während des Herstellungszyklusses. Die Abtrennung des extrudierten Schlauchs mit dem fertig aufgeblasenen Behälter erfolgt erst, nachdem die Blasformwerkzeuganordnung sich um einen darüber angeordneten Schlauchabschnitt geschlossen hat. Zum Abtrennen ist eine Trenneinrichtung vorgesehen, die gleichfalls auf der der Extrusionsdüse abgewandten Seite der Blasformwerkzeuganordnung angeordnet ist.

Bei der axialen Höhenverstellung des Extruderkopfes müssen in relativ kurzen Zeitabschnitten grosse Massen bewegt werden. Dies resultiert in einem verhältnismässig grossen Energiebedarf. Die exakte axiale Höhenverstellung ist mit einem relativ grossen Steuerungsaufwand verbunden. Die exakte Ausrichtung und die Vermeidung von Fehllagen des Kunststoffschlauchs, die Reproduzierbarkeit des Herstellvorgangs infolge des Einsatzes nur einer einzigen Blasformkavität und die Vermeidung vom Totzeiten für eine seitliche Verstellung der Blasformwerkzeuganordnung rechtfertigen jedoch diesen Aufwand. Dennoch besteht der Wunsch, diese zu hervorragenden Ergebnissen führende Extrusionsblasvorrichtung noch weiter zu vereinfachen.

Aus der WO02/081180 ist eine Vorrichtung zur Herstellung von Hohlkörpern aus Kunststoff im Extrusionsblasverfahren bekannt. Diese besitzt eine Extrusionseinheit, die einen eine Längsrichtung der Vorrichtung definierenden Extruder und einen mit dem Extruder verbundenen Extruderkopf aufweist und in einem Gehäuserahmen montiert ist. Wenigstens eine Blasformstation weist einen Blasformtisch mit wenigstens einem Formwerkzeug auf, das mit einer an der der Extrusionsdüse zugewandten Seite des Formwerkzeugs angeordneten Öffnung versehen ist. Das Formwerkzeug ist auf einer im Wesentlichen senkrecht zur Längsrichtung verlaufenden, lateralen Bahn aus einer Endposition seitlich des Extruderkopfes in eine Position unter dem Extruderkopf und wieder zurück bewegbar. Dadurch können die Extrusionsdüse und die Öffnung des Formwerkzeugs miteinander in vertikale Überdeckung gebracht werden. Die Extrusionseinheit ist um eine horizontale Achse vertikal neigbar und um eine vertikale Achse lateral schwenkbar im Gehäuse gelagert, und in Längsrichtung verschiebbar. Die gelenkige Lagerung ist im Bereich des Schwerpunktes der Extrusionseinheit ausgebildet, nämlich am dem Extruderkopf abgewandten Endbereich des Extruders. Eine Antriebseinheit für den Extruder ist als Gegengewicht zum Extruder an das Getriebegehäuse angeflanscht.

Aufgabe der vorliegenden Erfindung ist es daher, eine auf einer einzigen Blasformwerkzeuganordnung beruhende Extrusionsblasvorrichtung mit relativer axialer Verstellbarkeit des Extruderkopfes zur Blasformwerkzeuganordnung dahingehend zu vereinfachen, dass der konstruktive und steuerungstechnische Aufwand reduziert wird. Der Energieaufwand für den Betrieb der Vorrichtung soll gleichfalls verringert werden können. Dabei sollen die Vorteile der Extrusionsblasvorrichtung mit relativer axialer Verstellbarkeit des Extruderkopfes zur Blasformwerkzeuganordnung und mit permanenter Führung des extrudierten Kunststoffschlauches während des Herstellungszyklusses erhalten bleiben, und das Extrusionsblasverfahren gemäss dem in der WO 2004/ 078457 A1 dargelegten Prinzip durchführbar bleiben. Ferner sollen auch höher gebaute Blasformwerkzeuganordnungen unter der Extrusionsdüse des Extruderkopfes angeordnet werden können.

Die Lösung dieser Aufgaben besteht in einer Extrusionsblasvorrichtung zur Herstellung von Kunststoffbehältern, welche die im kennzeichnenden Abschnitt des Patentanspruchs 1 angeführten Merkmale aufweist. Ein zugeordnetes erfindungsgemässes Verfahren weist die im kennzeichnenden Abschnitt des unabhängigen Verfahrensanspruchs angeführten Merkmale auf. Weiterbildungen und/oder vorteilhafte Ausführungsvarianten der Erfindung sind Gegenstand der abhängigen Vorrichtungs- bzw. Verfahrensansprüche.

Durch die Erfindung wird eine Extrusionsblasvorrichtung zur Herstellung von Kunst stoffbehältern, insbesondere von Kunststoffflaschen, vorgeschlagen, die einen Extruderkopf, der mit wenigstens einem Extruder für Kunststoffmaterial verbunden ist und wenigstens eine Extrusionsdüse aufweist, eine Blasformwerkzeuganordnung mit wenigstens einer Blasformkavität und wenigstens eine Einblasvorrichtung umfasst, die an der dem Extruderkopf abgewandten Seite der Blasformwerkzeuganordnung angeordnet ist und durch eine dort vorgesehen Mündung in die Blasformkavität einfahrbar ist. Während eines Herstellungszyklusses ist der Extruderkopf gegenüber der Blasformwerkzeuganordnung axial höhenverstellbar. Dazu ist der Extruder entlang seiner Längserstreckung an einer Drehachse angelenkt und nach Art einer Wippe kippbar.

Damit auch Kunststoffbehälter mit grossen Bauhöhen problemlos mit der Extrusionsblasvorrichtung herstellbar sind, sind der Extruder und seine Drehachse zudem höhenverstellbar angeordnet. Dadurch können auch höher gebaute Blasformwerkzeuganordnungen unter der Extrusionsdüse des Extruderkopfes angeordnet werden. Durch die kippbare Anlenkung des Extruders ist die relative axiale Abstandsverstellung der Extrusionsdüse von der Blasformwerkzeuganordnung sehr einfach bewerkstelligbar. Die Höhenverstellung der Extrusionsdüse beschränkt sich auf eine reine Kippbewegung des Extruders. Der mit dem Extruder verbundene Extruderkopf folgt automatisch der Kippbewegung und wird gegenüber seiner Ausgangsstellung nach oben oder nach unten geschwenkt. Die konstruktive Auslegung der Extrusionsblasvorrichtung ist dadurch vereinfacht. Trotz der einfachen Realisierung der axialen Verstellbarkeit des Extruderkopfes sind die für die Durchführung des Extrusionsblasverfahrens gemäss dem in der WO 2004/078457 A1 geschilderten Prinzip erforderlichen Voraussetzungen vollumfänglich gewährleistet Die Anordnung der Blasformwerkzeuge zwischen dem Extruderkopf und der Einblasvorrichtung bleibt erhalten. Die für die permanente Führung des extrudierten Schlauchs erforderliche relative Abstandsverstellung zwischen der Blasformwerkzeuganordnung und dem Extruderkopf wird durch das wippenartige Verkippen des Extruders erzielt.

Zweckmässigerweise ist der Extruder im Bereich des Extruderkopfes mit einer Hebeeinrichtung verbunden. Mittels dieser Hebeeinrichtung, beispielsweise einem Kettentrieb, ist die Kippbewegung des Extruders sehr einfach und energiesparend durchführbar.

Die Extrusionsdüse beschreibt bei der Verkippung des Extruders mit dem Extruderkopf einen Kreisbogen. Damit die horizontale Verschiebung der Extrusionsdüse beim Verkippen möglichst klein gehalten werden kann, erweist es sich von Vorteil, wenn die Extrusionsdüse bzw. ihre Mündung bei horizontaler Ausrichtung des Extruders auf der gleichen Höhe angeordnet ist wie die Drehachse.

Die Verkippbarkeit des Extruders gegenüber seiner horizontalen Ausgangslage ist derart ausgelegt, dass der Extruderkopf im Bereich der Extrusionsdüse einen maximalen Hub von bis zu + 200 mm beschreibt. Dieser Hub reicht aus, um das Extrusionsblasverfahren mit nur einer einzigen Blasformwerkzeuganordnung und permanenter Führung des extrudierten Schlauchs gemäss dem in der WO 2004/ 078457 A1 beschriebenen Prinzip durchführen zu können. Die maximale horizontale Verschiebung der Exhusionsdüse bei diesem Hub beträgt bis zu etwa + 20% des Maximalhubs und führt zu keinen Problemen in der axialen Ausrichtung des extrudierten Kunststoffschlauchs und der Blasformkavität.

Die Drehachse ist derart entlang der Längserstreckung des Extruders vorgesehen, dass ein Schwerpunkt des Systems Extruder/ Extruderkopf bei maximale vorgesehener Auslenkung immer in demjenigen Abschnitt des Extruders verbleibt, der sich von der Drehachse bis zu dem vom Extruderkopf abgewandten Ende des Extruders erstreckt. Bezogen auf den Extruderkopf liegt der Schwerpunkt des Systems inuner hinter der Drehachse. Dadurch ist sichergestellt, dass die Gewichtskraft nach oben gerichtet ist. Im Fall eines Versagens der im Bereich des Extruderkopfs angreifenden Hebemittel, beispielsweise eines Kettentriebs, wird der Extruderkopf immer angehoben und kann nicht auf die Blasformwerkzeuganordnung schlagen oder zu einer Klemmung führen. Das Anheben des Extruders wird durch diese Anordnung der Drehachse deutlich erleichtert und benötigt einen geringeren Energieaufwand. Für das Absenken wird ohnehin eine geringere Energie benötigt, da sie ja durch die natürlich Schwerkraft unterstützt wird.

Zur weiteren konstruktiven Vereinfachung ist der Extruderkopf starr mit dem Extruder verbunden. Dadurch wird jede axiale Stellbewegung des Extruders unmittelbar auf den Extruder übertragen. Aufwendige gelenkige Verbindungen können entfallen.

Um eine zusätzliche Höhenverstellbarkeit zu ermöglichen, kann in einer weiteren Ausführungsvariante der Extrusionsblasvorrichtung der Extruderkopf zusätzlich zur wippenartigen Verkippung auch noch axial höhenverstellbar angeordnet sein. Dadurch werden übermässige Kippbewegungen verhindert, und die Extrusionsdüse wird nicht übermässig weit horizontal verschoben.

Die Einblasvorrichtung ist ein Blasdorn oder eine Blasnadel. Die Verwendung eines Blasdorns hat den Vorteil, dass zugleich mit dem Blasdorn auch der Halsabschnitt der aufgeblasenen Kunststoffflasche ausgebildet und kalibriert wird. Bei Verwendung einer Blasnadel erfolgt nur ein Aufblasen des in die Formkavität eingelegten Kunststoffschlauchs. Blasnadeln kommen beispielsweise auch bei mehreren übereinander angeordneten, miteinander in Verbindung stehenden Formkavitäten zum Einsatz und werden dabei beispielsweise seitlich im Halsbereich der aufzublasenden Flasche zugestellt. Extrusionsblasvorrichtungen können auch mit Kombinationen von Blasdornen und Blasnadeln ausgestattet sein.

Indem während des Herstellungszyklusses für einen Kunststoffbehälter der mit dem Extruderkopf verbundene Extruder um eine Drehachse wippenartig verkippt wird, kann die erforderliche axiale Höhenverstellung des Extruderkopfes bzw. der Extrusionsdüse relativ zur Blasformwerkzeuganordnung mit relativ geringem Energie- und Steuerungsaufwand durchgeführt werden.

Um die horizontale Verschiebung der Extrusionsdüse beim Verkippen möglichst gering zu halten, wird der Extruder aus einer horizontalen Ausgangsstellung verkippt, in der seine Drehachse auf der gleichen Höhe angeordnet ist wie die Extrusionsdüse des Extruderkopfes. Gleichzeitig wird darauf geachtet, dass die Verkippung nur zu einem maximalen Hub des Extruderkopfes an seiner Extrusionsdüse von bis zu + 200 mm führt.

Für die Herstellung von Kunststoffbehältern grosser Bauhöhe wird eine höher gelegene Ausgangsposition für die Verkippung des Extruders eingestellt. Dies erfolgt dadurch, dass der Extruder samt seiner Drehachse angehoben wird. Durch diese einfache Massnahme können auch Blasformwerkzeuganordnungen mit grösseren Bauhöhen unter dem Extruderkopf angeordnet werden und werden übergrosse Kippbewegungen verhindert, die zu nicht tolerierbaren horizontalen Verschiebungen der Mündung der Extrusionsdüse führen könnten.

Eine weitere Massnahme, um die horizontale Verschiebung der Extrusionsdüse möglichst klein zu halten, besteht darin, dass der Extruderkopf zusätzlich zur Höhenverstellung infolge Verkippung des Extruders innerhalb eines Rahmens höhenverstellt wird.

Eine weitere Ausführungsvariante der Erfindung kann auch noch vorsehen, dass die Drehachse beim Verkippen des Extruders gemeinsam mit dem Extruder in Längsrichtung verschoben wird, um allzu grosse horizontale Verschiebungen der Mündung der Extrusionsdüse zu kompensieren.

Weitere Vorteile und Merkmale der Erfindung ergeben sich aus der nachfolgenden Beschreibung unter Bezugnahme auf die schematischen Darstellungen eines Ausführungsbeispiels. Es zeigen:
- Fig.1: eine Prinzipdarstellung einer Extrusionsblasmaschine gemäss der Erfindung;
- Fig. 2: ein Schema des Verkippens eines Extruderkopfes bei kleinen Behältergrössen; und
- Fig. 3: ein Schema des Verkippens des Extruderkopfes bei Blasformwerkzeuganordnungen mit grossen Bauhöhen.

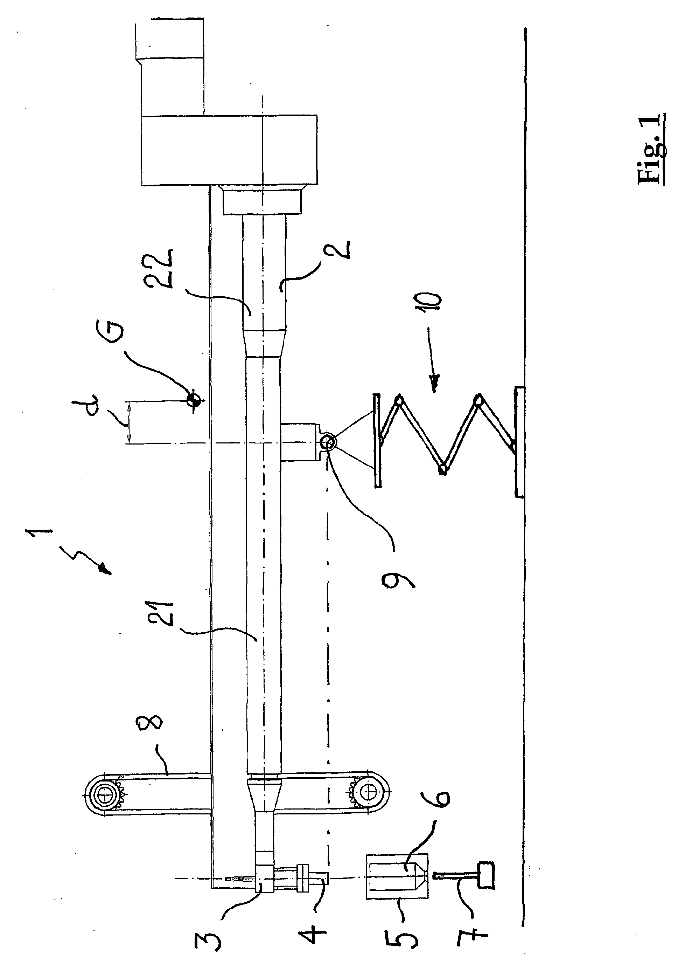

Fig. 1 zeigt schematisch die für das Verständnis der Erfindung wesentlichen Komponenten einer gesamthaft mit dem Bezugszeichen 1 versehenen Extrusionsblasanlage. Die Extrusionsblasanlage umfasst einen Extruder 2, der an seinem einen, vorderen Ende mit einem Extruderkopf 3 verbunden ist. Der Extruderkopf 3 weist eine oder mehrere Extrusionsdüsen 4 auf. Unterhalb des Extruderkopfes 3 ist eine Blasformwerkzeuganordnung 5 angeordnet, die wenigstens eine Blasformkavität 6 aufweist. Üblicherweise entsprechen die Anzahlen der Extrusionsdüsen 4 und der Blasformkavitäten 6 einander. Die dargestellte Blasformkavität 4 mündet an der von der Extrusionsdüse 4 abgewandten Seite der Blasformwerkzeuganordnung 5. Jeder Blasformkavität 6 ist eine Einblasvorrichtung 7, beispielsweise ein Blasdorn, zugeordnet, welche auf die Mündung der Blasformkavität 6 ausgerichtet und an der von der Extrusionsdüse 4 abgewandten Seite der Blasformwerkzeuganordnung 5 angeordnet ist. Die Einblasvorrichtung 7 ist durch die Mündung in die Blasformkavität 6 einfahrbar, um einen eingelegten extrudierten Schlauchabschnitt gemäss der Formkavität 6 zu einem Kunststoffbehälter, beispielsweise zu einer Kunststoffflasche, aufzublasen.

Die Extrusionsdüse 4, die Blasformkavität 6 in der Blasformwerkzeuganordnung 5 und die Einblasvorrichtung 7 sind axial im Wesentlichen aufeinander ausgerichtet. Während eines Zyklusses zur Herstellung des Kunststoffbehälters wird der relative Abstand zwischen der Extrusionsdüse 4 und der Blasformwerkzeuganordnung 5 verändert. Die Herstellung eines Kunststoffbehälters erfolgt dabei nach dem in der WO 2004/078457 A1 beschriebenen Prinzip, welche in dieser Hinsicht zum integralen Bestandteil der vorliegenden Patentanmeldung erklärt wird. Gemäss dem dort beschriebenen Prinzip wird der von der Extrusionsdüse 4 ein- oder mehrschichtig extrudierte Kunststoffschlauch permanent geführt. Die Führung des Kunststoffschlauchs erfolgt dabei durch die Extrusionsdüse 4 und die Blasformwerkzeuganordnung 5 bzw. bei geöffneten Formteilen durch die Extrusionsdüse 4 und die in dem fertig aufgeblasenen Kunststoffbehälter befindliche Einblasvorrichtung 7. Ein Abtrennen des fertig aufgeblasenen Kunststoffbehälters vom extrudierten Kunststoffschlauch erfolgt erst, nachdem sich die Formteile der Blasformwerkzeuganordnung 5 um einen neuen Abschnitt des von der Extrusionsdüse 4 extrudierten Kunststoffschlauchs geschlossen haben. Dabei erfolgt die Trennung an der von der Extrusionsdüse 4 abgewandten Seite der Blasformwerkzeuganordnung 5 mit Hilfe einer dort vorgesehenen, in Fig. 1 nicht näher dargestellten Trennvorrichtung.

Zur Realisierung der axialen Relativbewegung zwischen der Extrusionsdüse 4 und der Blasformwerkzeuganordnung 5 ist der Extruder 2entlang seiner Längserstreckung an einer Drehachse 9 angelenkt. Durch die gelenkige Lagerung ist der Extruder 2 nach Art einer Wippe um die Drehachse 9 kippbar. Die Kippbewegung wird auf den Extruderkopf mit der Extrusionsdüse 4 übertragen. Dadurch ist der Abstand zwischen der Extrusionsdüse 4 und der darunter angeordneten Blasformwerkzeuganordung 5 veränderbar. Zum Auslösen der Kippbewegung ist der Extruder 2 im Bereich des Extruderkopfes 3 mit einer Hebeeinrichtung 8 verbunden. Beispielsweise handelt es sich bei der Hebeeinrichtung 8 um einen Kettentrieb. Wie es in Fig. 1 durch eine strichpunktierte Linie angedeutet ist, befinden sich bei horizontal ausgerichtetem Extruder 2 die Drehachse 9 und die Extrusionsdüse 4 bzw. deren Mündung auf der gleichen Höhe. Von dieser Ausgangsstellung ausgehend ist der Extruder in einem vorgegebenen Ausmass anheb- oder absenkbar.

Die Drehachse 9 ist derart entlang der Längserstreckung des Extruders 2 angeordnet, dass ein Gesamtschwerpunkt G des Systems Extruder 2/Extruderkopf 3 in einem rückwärtigen Abschnitt 22 des Extruders 2 angeordnet ist, der sich von der Drehachse 9 zum dem Extruderkopf 3 abgewandten Ende des Extruders 2 erstreckt. Der zweite, vordere Abschnitt des Extruders trägt das Bezugszeichen 21. Der Abstand d des Gesamtschwerpunkts G von der Drehachse 9 ist dabei derart gewählt, dass auch bei maximaler positiver oder negative Auslenkung des Extruders 2 gegenüber seiner horizontalen Ausgangsstellung der Gesamtschwerpunkt G im rückwärtigen Abschnitt 22 des Extruders bleibt. Durch diese Massnahme ist sichergestellt, dass die Gewichtskraft an der Extrusionsdüse 4 immer in die von der Blasformwerkzeuganordung 5 wegweisende Richtung, das heisst nach oben, gerichtet ist. Dadurch wird zuverlässig verhindert, dass bei einem Versagen der Hebeeinrichtung 8 der Extruder gemäss der Orientierung der Schwerkraft nach unten kippt und die Extrusionsdüse 4 auf die Oberseite der Blasformwerkzeuganordnung 5 aufschlägt.

Bei dem in Fig. 1 schematisch dargestellten Ausführungsbeispiel der Extrusionsblasvorrichtung 1 ist der Extruder 2 samt fest angeflanschtem Extruderkopf 3 zusätzlich zur Verkippbarkeit auch höhenverstellbar angeordnet. Dazu ist der Extruder 2 beispielsweise im Bereich der Anbindung an die Drehachse 9 auf eine Hebebühne 10 angeordnet. Dadurch kann die horizontale Ausgangsposition des Extruders 2 an verschieden hohe Blasformwerkzeuganordnungen 5 angepasst werden. Dies ist beispielsweise erforderlich, wenn Kunststoffbehälter mit grösseren Bauhöhen hergestellt werden sollen. Durch die Höhenverstellbarkeit des Extruders 2 samt seiner Anlenkung an der Drehachse 9 werden allzu grosse Schwenkwinkel des Extruderkopfes 3 bzw. der Extrusionsdüse 4 beim Verkippen vermieden. Dies würden sonst dazu führen, dass die Position der Mündung der Extrusionsdüse 4 horizontal zu weit verschoben wird. Dadurch ist auch bei der Herstellung von Kunststoffbehältern mit grossen Bauhöhen eine Fehllage des extrudierten Schlauchs verhindert.

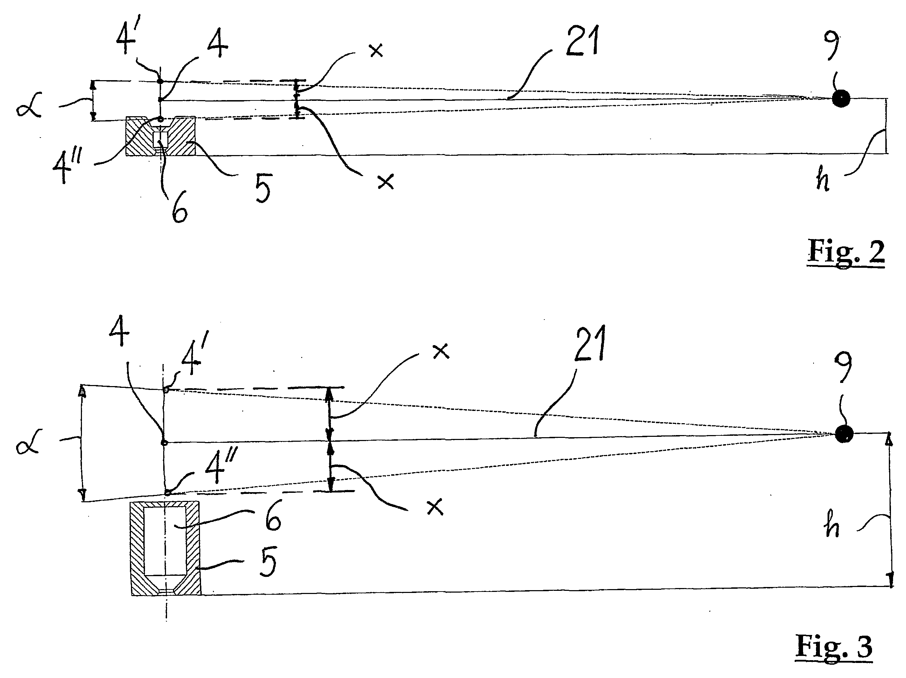

Fig. 2 und 3 zeigen schematisch die Verhältnisse beim Verkippen des Extruders bei zwei Blasformwerkzeugen 5 mit unterschiedlich grossen Bauhöhen für verschieden hohe Formkavitäten 6 für unterschiedlich grosse Kunststoffbehälter. Mit 21 ist jeweils der vordere Abschnitt des Extruders bezeichnet, der sich von der Drehachse 9 bis zur Mündung der Extrusionsdüse erstreckt, welche in Fig. 2 bzw. 3 jeweils bei dem Bezugszeichen 4 angedeutet ist. Dabei bezeichnen die ausgezeichneten Linien jeweils die horizontale Ausgangsposition, in der die Mündung der Extrusionsdüse 4 der gleichen Höhe angeordnet ist wie die Drehachse 9. Die strichlierten Linien geben die aus der horizontalen Position in die positive (oben) bzw. negative (unten) gekippten Endlagen des Extruders an. Die maximale Auslenkung der Mündung der Extrusionsdüse nach oben bzw. nach unten ist jeweils mit den Bezugszeichen 4' bzw. 4" angedeutet. Der dabei auftretende Hub in positive und in negative Richtung ist jeweils mit x bezeichnet und beträgt bis zu ± 200 mm. Die Mündung der Extrusionsdüse 4 bewegt sich entlang eines Kreisbogens zu ihren oberen und unteren Endpositionen 4' bzw. 4". Der über die beiden Endpositionen 4' 4" der Mündung der Extrusionsdüse 4 gemessene maximale Schwenkwinkel ist mit α bezeichnet und setzt sich aus zwei gleich grossen Schwenkwinkeln ± α/2 aus der mittigen Ausgangsposition nach oben bzw. nach unten zusammen.

Aus Fig. 2 ist ersichtlich, dass wegen des relativ grossen Abstands von der Drehachse 9 und des relativ geringen Hubs die Mündung der Extrusionsdüse 4 beim Verkippen in ihre beiden Endpositionen 4' bzw. 4" praktisch kaum merklich in horizontaler Richtung verschoben wird. Fig. 3 hingegen zeigt, dass es bei grösserem Hub zu einer merklichen horizontalen Verschiebung der Endlagen 4' bzw. 4" der Mündung der Extrusionsdüse 4 gegenüber der Ausgangslage kommt. Diese beträgt bei maximalem Hub bis zu 10% des maximalen Hubs. Verschiebungen in dieser Grössenordnung sind tolerierbar und führen zu keinen Problemen beim Umfassen des extrudierten Schlauchs von den Formwerkzeugen. In Fig. 2 ist im Bereich der Drehachse 9 auch deren Höhenverstellbarkeit mit dem Bezugszeichen h angedeutet Durch die Höhenverstellbarkeit h der Drehachse 9 des Extruders kann den Erfordernissen von Blasformwerkzeugen 5 mit grösseren Bauhöhen Rechnung getragen werden, ohne dass übergrosse Kippbewegungen durchgeführt werden müssen, welche zu untolerierbaren horizontalen Verschiebungen der Mündung der Extrusionsdüse 4 führen könnten.

Für die Herstellung von besonders hohen Kunststoffgefässen kann auch noch vorgesehen sein, dass der Extruderkopf zusätzlich zur Lageänderung infolge Verkippen gegenüber seine Ausgangsposition höhenverstellt werden kann. Eine weitere Ausführungsvariante der Erfindung kann auch noch vorsehen, dass die Drehachse beim Verkippen des Extruders gemeinsam mit dem Extruder in Längsrichtung verschoben wird, um allzu grosse horizontale Verschiebungen der Mündung der Extrusionsdüse zu kompensieren.

In den schematischen Zeichnungen sind ein Extruderkopf mit nur einer Extrusionsdüse und ein Blasformwerkzeug mit nur einer Blasformkavität dargestellt. Es versteht sich, dass die geschilderte Anordnung und das geschilderte Verfahren auch bei Extrusionsblasvorrichtungen mit Mehrfachdüsenwerkzeugen und Mehrfachblasformwerkzeugen oder Anordnungen von Einfach- und/oder Mehrfachblasformwerkzeugen anwendbar ist. Die Zahl der Einblasvorrichtungen ist dabei auf die Anzahl der Blasformkavitäten abgestimmt. Die erfindungsgemässe Vorrichtung kann eine Extrusionsblasvorrichtung für eine kontinuierliche oder diskontinuierliche Extrusion des Kunststoffschlauchs sein. Ebenso ist das erfindungsgemässe Verfahren bei kontinuierlich und diskontinuierlich extrudiertem Kunststoffschlauch durchführbar.

## Patentansprüche

1. Extrusionsblasvorrichtung zur Herstellung von Kunststoffbehältern, insbesondere von Kunststoffflaschen, mit einem Extruderkopf (3), der mit wenigstens einem Extruder (2) für Kunststoffmaterial verbunden ist und wenigstens eine Extrusionsdüse (4) aufweist, mit einer Blasformwerkzeuganordnung (5) mit wenigstens einer Blasformkavität (6), und mit wenigstens eine Einblasvorrichtung (7), die an der dem Extruderkopf (3) abgewandten Seite der Blasformwerkzeuganordnung (5) angeordnet ist und durch eine dort vorgesehen Mündung in die Blasformkavität (6) einfahrbar ist, wobei der Extruderkopf (3) gegenüber der Blasformwerkzeuganordnung (5) axial höhenverstellbar ist, **dadurch gekennzeichnet, dass** der Extruder (2) an einer Drehachse (9) angelenkt und um diese Drehachse (9) entlang seiner Längserstreckung nach Art einer Wippe kippbar gelagert ist, und dass der Extruder (2) und seine Drehachse (9) höhenverstellbar angeordnet sind.

2. Extrusionsblasvorrichtung nach Anspruch 1, **dadurch gekennzeichnet, dass** der Extruder (2) mit einer Hebeeinrichtung (8), beispielsweise einem Kettentrieb, verbunden ist.

3. Extrusionsblasvorrichtung nach Anspruch 1 oder 2, **dadurch gekennzeichnet, dass** die Extrusionsdüse (4) bei horizontaler Ausrichtung des Extruders (2) auf der gleichen Höhe angeordnet ist wie die Drehachse (9).

4. Extrusionsblasvorrichtung nach Anspruch 3, **dadurch gekennzeichnet, dass** der Extruder (2) derart gegenüber seiner horizontalen Ausgangslage verkippbar ist, dass der Extruderkopf (3) im Bereich der Extrusionsdüse (4) einen maximalen Hub (x) von bis zu + 200 mm beschreibt.

5. Extrusionsblasvorrichtung nach einem der vorangehenden Ansprüche, **dadurch gekennzeichnet, dass** die Drehachse (9) derart entlang der Längserstreckung des Extruders (2) vorgesehen ist, dass ein Schwerpunkt (G) des Systems Extruder/Extruderkopf bei maximal vorgesehener Auslenkung in einem rückwärtigen Abschnitt (22) des Extruders angeordnet ist, der sich von der Drehachse (9) bis zu dem vom Extruderkopf (3) abgewandten Ende des Extruders (2) erstreckt.

6. Extrusionsblasvorrichtung nach einem der vorangehenden Ansprüche, **dadurch gekennzeichnet, dass** der Extruderkopf (3) starr mit dem Extruder (2) verbunden ist.

7. Extrusionsblasvorrichtung nach einem der Ansprüche 1 - 5, **dadurch gekennzeichnet, dass** der Extruderkopf (3) zusätzlich zur wippenartigen Verkippung axial höhenverschiebbar ist.

8. Extrusionsblasvorrichtung nach einem der vorangehenden Ansprüche, **dadurch gekennzeichnet, dass** die Drehachse (9) axial verschiebbar ist.

9. Extrusionsblasvorrichtung nach einem der vorangehenden Ansprüche, **dadurch gekennzeichnet, dass** die Einblasvorrichtung (7) ein Blasdorn oder eine Blasnadel ist.

10. Verfahren zur Herstellung von Kunststoffflaschen mit eine Extrusionsblasvorrichtung (1) gemäss einem der vorangehenden Ansprüche, **dadurch gekennzeichnet, dass** während eines Herstellungszyklusses für eine Kunststoffflasche ein mit einem Extruderkopf (3) verbundener Extruder (2) um eine Drehachse (9) wippenartig verkippt wird, und dass für die Herstellung von Kunststoffbehältem grosser Bauhöhe eine neue Ausgangsposition für die Verkippung des Extruders (2) eingestellt wird, indem der Extruder (2) samt seiner Drehachse (9) angehoben wird.

11. Verfahren nach Anspruch 10, **dadurch gekennzeichnet, dass** der Extruder (2) aus einer horizontalen Ausgangsstellung verkippt wird, in der eine Extrusionsdüse (4) des Extruderkopfes (3) auf der gleichen Höhe angeordnet ist wie die Drehachse (9), und dass die Verkippung zu einem maximalen Hub (x) des Extruderkopfes an seiner Extrusionsdüse (4) von bis zu + 200 mm führt.

12. Verfahren nach einem der Ansprüche 10 oder 11, **dadurch gekennzeichnet, dass** der Extruder (2) derart verkippt wird, dass ein Schwerpunkt (G) des Systems Extruder/Extruderkopf bei maximal vorgesehener Auslenkung den Ort der Drehachse (9) nicht in Richtung des Extruderkopfes (3) überschreitet, sondern in einem rückwärtigen Abschnitt (22) des Extruders verbleibt, der sich von der Drehachse (9) bis zu dem vom Extruderkopf (3) abgewandten Ende des Extruders (2) erstreckt.

13. Verfahren nach einem der Ansprüche 10 bis 12, **dadurch gekennzeichnet, dass** der Extruderkopf (3) zusätzlich zur Verkippung des Extruders (2) axial höhenverstellt wird.

14. Verfahren nach einem der Ansprüche 10 bis 13, **dadurch gekennzeichnet, dass** beim Verkippen des Extruders (2) seine Drehachse (9) in Längsrichtung des Extruders (2) verschoben wird.

## Claims

1. Extrusion blow molding for producing plastic containers, in particular plastic bottles, with an extruder head (3), which is connected to at least one extruder (2) for plastic material and which has at least one extrusion dye (4), with a blow molding tool arrangement (5) with at least one blow molding cavity (6) and with at least one insufflation device (7) which is placed on the side of the blow molding tool arrangement (5) facing away from the extruder head (3) and which can be inserted into the blow molding cavity through an opening provided there, whereby the extruder head (3) is axially height adjustable, **characterized in that** the extruder (2) is articulated on an axis of rotation (9) and positioned tiltable about this axis of rotation (9) along the longitudinal extension thereof in the manner of a rocker and that the extruder (2) and its axis of rotation are placed height adjustable.

2. Extrusion blow molding according to claim 1, **characterized in that** the extruder (2) is connected to a lifting device (8), for example a chain drive.

3. Extrusion blow molding according to claim 1 or 2, **characterized in that**, when the extruder (2) is horizontally orientated, the extrusion dye (4) is placed at the same level than the axis of rotation (9).

4. Extrusion blow molding according to claim 3, **characterized in that** the extruder (2) is tiltable with respect to its horizontal starting position in such a manner that the extruder head (3) has a maximal lift (x) of up to + 200 mm in the area of the extrusion dye.

5. Extrusion blow molding according to one of the preceding claims, **characterized in that** the axis of rotation (9) is provided along the longitudinal extension of the extruder (2) in such a manner that a center of gravity (G) of the system extruder/extruder head is placed in a position of maximum deflection in a rear section (22) of the extruder that extends from the axis of rotation (9) up to the end of the extruder (2) facing away from the extruder head (3).

6. Extrusion blow molding according to one of the preceding claims, **characterized in that** the extruder head (3) is rigidly connected to the extruder (2).

7. Extrusion blow molding according to one of the claims 1 to 5, **characterized in that** the extruder head (3) is axial height adjustable additionally to the rocker-like tilting.

8. Extrusion blow molding according to one of the preceding claims, **characterized in that** the axis of rotation (9) is axially displaceable.

9. Extrusion blow molding according to one of the preceding claims, **characterized in that** the insufflating device (7) is a blow mandrel or a blow needle.

10. Method for producing plastic bottles with an extrusion blow molding device (1) according to one of the preceding claims, **characterized in that** during a production cycle for a plastic bottle an extruder (2) connected to an extruder head (3) is rocker-like tilted about an axis of rotation (9) and that for producing plastic containers with a great height a new starting position is adjusted for tilting the extruder (2), whereby the extruder (2) is lifted with its axis of rotation (9).

11. Method according to claim 10, **characterized in that** the extruder (2) is tilted from a horizontal starting position in which an extrusion dye (4) of the extruder head (3) is placed at the same level than the axis of rotation (9) and that the tilting leads to a maximal lift (x) of the extruder head on its extrusion dye (4) up to + 200 mm.

12. Method according to one of the claims 10 to 11, **characterized in that** the extruder (2) is tilted in such a manner that a center of gravity (G) of the system extruder/extruder head does not exceed the location of the axis of rotation (9), in a position of maximum deflection, in direction of the extruder head (3) but remains in a rear section (22) of the extruder that extends from the axis of rotation (9) up to the end of the extruder (2) facing away from the extruder head (3).

13. Method according to any of the claims 10 to 12, **characterized in that** the extruder head (3) is axially height adjustable additionally to the tilting of the extruder (2).

14. Method according to any of the claims 10 to 13, **characterized in that** during the tilting of the extruder (2) its axis of rotation (9) is displaced in longitudinal direction of the extruder (2).

## Revendications

1. Dispositif d'extrusion soufflage pour fabriquer des récipients en matière plastique, en particulier des bouteilles en matière plastique, avec une tête d'extrudeuse (3) qui est reliée à au moins une extrudeuse (2) pour de la matière plastique et qui présente au moins une buse d'extrusion (4), avec un arrangement d'outil de moule de soufflage (5) avec au moins une cavité de moule de soufflage (6) et avec au moins un dispositif de soufflage (7) qui est placé sur le côté de l'arrangement d'outil de moule de soufflage (5) qui est opposé à la tête d'extrudeuse (3) et qui peut être introduite dans la cavité de moule de soufflage par une embouchure qui y est prévue, la tête d'extrudeuse (3) étant réglable en hauteur axialement par rapport à l'arrangement d'outil de moule de soufflage (5), **caractérisé en ce que** l'extrudeuse (2) est articulée sur un axe de rotation (9) et est positionnée de manière pivotante à la manière d'une bascule autour de cet axe de rotation (9) le long de son extension en longueur et que l'extrudeuse (2) et son axe de rotation (9) sont placés réglables en hauteur.

2. Dispositif d'extrusion soufflage selon la revendication 1, **caractérisé en ce que** l'extrudeuse (2) est reliée à un dispositif de levage (8), par exemple à un entraînement à chaîne.

3. Dispositif d'extrusion soufflage selon la revendication 1 ou 2, **caractérisé en ce que** la buse d'extrusion (4) est placée, lorsque l'extrudeuse (2) est orientée horizontalement, à la même hauteur que l'axe de rotation (9).

4. Dispositif d'extrusion soufflage selon la revendication 3, **caractérisé en ce que** l'extrudeuse (2) peut basculer par rapport à sa position de départ horizontale de telle manière que la tête d'extrudeuse (3) décrit une course maximale (x) jusqu'à + 200 mm dans la zone de la buse d'extrusion (4).

5. Dispositif d'extrusion soufflage selon l'une des revendications précédentes, **caractérisé en ce que** l'axe de rotation (9) est prévu le long de l'extension en longueur de l'extrudeuse (2) de telle manière qu'un centre de gravité (G) du système extrudeuse/tête d'extrudeuse est placé dans une section arrière (22) de l'extrudeuse, lors d'une excursion prévue au maximum, centre qui s'étend de l'axe de rotation (9) à l'extrémité de l'extrudeuse (2) qui est opposée à la tête d'extrudeuse (3).

6. Dispositif d'extrusion soufflage selon l'une des revendications précédentes, **caractérisé en ce que** la tête d'extrudeuse (3) est reliée de manière rigide à l'extrudeuse (2).

7. Dispositif d'extrusion soufflage selon l'une des revendications 1 à 5, **caractérisé en ce que** la tête d'extrudeuse (3) est en plus du pivotement à la manière d'une bascule, déplaçable axialement en hauteur.

8. Dispositif d'extrusion soufflage selon l'une des revendications précédentes, **caractérisé en ce que** l'axe de rotation (9) est déplaçable axialement.

9. Dispositif d'extrusion soufflage selon l'une des revendications précédentes, **caractérisé en ce que** le dispositif de soufflage (7) est un mandrin de soufflage ou une aiguille de soufflage.

10. Procédé pour la fabrication de bouteilles en matière plastique avec un dispositif d'extrusion soufflage (1) selon l'une des revendications précédentes, **caractérisé en ce que** pendant un cycle de fabrication pour une bouteille en matière plastique une extrudeuse (2) reliée à une tête d'extrudeuse (3) pivote à la manière d'une bascule autour d'un axe de rotation (9) et que pour la fabrication de récipients en matière plastique de grande hauteur une nouvelle position de départ pour le basculement de l'extrudeuse (2) est réglée en soulevant l'extrudeuse (2) avec son axe de rotation (9).

11. Procédé selon la revendication 10, **caractérisé en ce que** l'extrudeuse (2) pivote de sa position de départ horizontale dans laquelle une buse d'extrusion (4) de la tête d'extrudeuse (3) est placée à la même hauteur que l'axe de rotation (9) et que le pivotement entraîne une course maximale (x) de la tête d'extrudeuse sur sa buse d'extrusion (4) allant jusqu'à + 200 mm.

12. Procédé selon l'une des revendications 10 ou 11, **caractérisé en ce que** l'extrudeuse (2) est pivotée de telle manière qu'un centre de gravité (G) du système extrudeuse/tête d'extrudeuse, pour une excursion prévue au maximum, ne dépasse l'endroit de l'axe de rotation (9) en direction de la tête d'extrudeuse (3) mais reste dans une section arrière (22) de l'extrudeuse qui s'étend de l'axe de rotation (9) jusqu'à l'extrémité de l'extrudeuse opposée à la tête d'extrudeuse (3).

13. Procédé selon l'une des revendications 10 à 12, **caractérisé en ce que** la tête d'extrudeuse (3) est déplacée axialement en hauteur en plus du pivotement de l'extrudeuse (2).

14. Procédé selon l'une des revendications 10 à 13, **caractérisé en ce que** lors du pivotement de l'extrudeuse (2) son axe de rotation (9) est déplacé dans le sens de la longueur de l'extrudeuse (2).
